# EUROPÄISCHE PATENTANMELDUNG

(11) **EP 3 171 070 A1**
(43) Veröffentlichungstag der Anmeldung: **24.05.2017**
(21) Anmeldenummer: 16199242.5
(22) Anmeldetag: 17.11.2016
(51) Int. Cl.: F16M 11/10, F16M 11/18, F16M 11/20, F16M 13/02, F21V 21/00

(54) **HALTERUNG**

(30) Priorität: 23.11.2015 DE 102015120249
(71) Anmelder: SICK AG, 79183 Waldkirch/Breisgau (DE)
(72) Erfinder: ANGENENDT, Christoph, 79108 Freiburg (DE); ALLGEIER, Gerd, 7921 Biederbach (DE)
(74) Vertreter: Manitz Finsterwald Patentanwälte PartmbB

(57) **Zusammenfassung**

Eine Halterung für einen optoelektronischen Sensor umfasst ein erstes Halterungsteil, das für eine Befestigung an einer ortsfesten Fixierfläche ausgebildet ist, und ein zweites Halterungsteil, das mit einem Gehäuse des optoelektronischen Sensors koppelbar ist, wobei das zweite Halterungsteil relativ zu dem ersten Halterungsteil um eine erste Schwenkachse drehbar ist. Es ist vorgesehen, dass an dem zweiten Halterungsteil eine Aufnahme für eine Schraubendreher-Klinge und an dem ersten Halterungsteil eine Verzahnung vorgesehen ist, oder umgekehrt, wobei wenigstens ein Zahn der Verzahnung derart in die Aufnahme hineinragt, dass er durch ein Klingenende einer in die Aufnahme eingeführten Schraubendreher-Klinge unter Abstützung des anderen Klingenendes an einem Anschlagabschnitt der Aufnahme beaufschlagbar ist, um das zweite Halterungsteil gegenüber dem ersten Halterungsteil um eine erste Schwenkachse zu verdrehen.

## Beschreibung

Die vorliegende Erfindung betrifft eine Halterung für einen optoelektronischen Sensor, insbesondere einen Laserscanner, mit einem ersten Halterungsteil, das für eine direkte oder indirekte Befestigung an einer ortsfesten Fixierfläche wie zum Beispiel einer Wand ausgebildet ist, und einem zweiten Halterungsteil, das mit einem Gehäuse des optoelektronischen Sensors koppelbar ist, wobei das zweite Halterungsteil relativ zu dem ersten Halterungsteil um eine erste Schwenkachse drehbar ist.

Bei der Montage von optoelektronischen Sensoren ist es häufig erforderlich, den Sensorkopf in Bezug auf ein ortsfestes Koordinatensystem auszurichten, also beispielsweise die Scanebene eines Laserscanners parallel zum Boden auszurichten. Dies kann dadurch bewerkstelligt werden, dass der Sensor mittels einer Halterung der genannten Art montiert wird und hierbei das zweite Halterungsteil relativ zu dem ersten Halterungsteil so lange geschwenkt wird, bis die gewünschte Ausrichtung des Sensorkopfs erreicht ist.

Gängige Halterungen erlauben jedoch nur eine relativ grobe Verstellung der Halterungsteile, weshalb der Montagevorgang oft zeitaufwändig und lästig ist.

Es besteht daher ein Bedürfnis nach Sensorhalterungen, die eine exaktere und einfachere Justierung erlauben.

Die Lösung dieser Aufgabe erfolgt durch eine Halterung mit den Merkmalen des Anspruchs 1.

Die Erfindung sieht vor, dass an dem zweiten Halterungsteil eine Aufnahme für eine Schraubendreher-Klinge und an dem ersten Halterungsteil eine Verzahnung vorgesehen ist, oder umgekehrt, wobei wenigstens ein Zahn der Verzahnung derart in die Aufnahme hineinragt, dass er durch ein Klingenenge einer in die Aufnahme eingeführten Schraubendreherklinge unter Abstützung des anderen Klingenendes an einem Anschlagabschnitt der Aufnahme beaufschlagbar ist, um das zweite Halterungsteil gegenüber dem ersten Halterungsteil um die erste Schwenkachse zu verdrehen.

Durch Drehen des Schraubendrehers ist eine Feinjustierung der beiden Halterungsteile möglich. Somit kann die Neigung des zu montierenden Sensors besonders exakt eingestellt werden. Aufwändige Spezialwerkzeuge sind nicht erforderlich, da für den Justiervorgang ein handelsüblicher Schlitz-Schraubendreher verwendet werden kann. Ein Vorteil der Erfindung besteht darin, dass die Aufnahme und die Verzahnung relativ einfach herstellbar sind und beispielsweise direkt an den jeweiligen Halterungsteilen angeformt sein können.

Die Erfindung schließt nicht aus, dass die tatsächliche Verstellung mit einem anderen Werkzeug als einem Schlitz-Schraubendreher erfolgt, das eine einem Standard-Schlitz-Schraubendreher entsprechende Klinge aufweist. Insbesondere könnte zur Verstellung ein Spezialwerkzeug vorgesehen sein. Durch die Eignung für die Verwendung einer Schraubendreherklinge ist vorteilhafterweise jedoch zum Beispiel das Vorsehen eines Spezialwerkzeugs für die Halterung nicht zwingend erforderlich.

Insofern ist der anspruchsgemäße Hinweis auf eine Schlitz-Schraubendreherklinge so zu verstehen, dass hier eine Eignung beschrieben ist, eine Schlitz-schraubendreherklinge zu verwenden. Jedes andere Werkzeug soll damit auch gemeint sein, das zwar nicht explizit ein Schlitz-Schraubendreher ist, aber dennoch so verwendet werden kann, wenn es ein der Schlitz-Schraubendreherklinge ähnliches Element aufweist.

Vorzugsweise umfasst der Anschlagabschnitt zwei gegenüberliegende Anschlagflächen, die durch jeweilige Innenwandbereiche der Aufnahme gebildet sind. Das am Anschlagabschnitt befindliche Klingenende der Schraubendreher-Klinge kann sich somit beidseitig abstützen, so dass der Schraubendreher dementsprechend in beide Richtungen gedreht werden kann. Der Abstand zwischen den beiden gegenüberliegenden Anschlagflächen kann an die Klingendicke einer Standard-Schraubendreher-Klinge angepasst sein, so dass ein Klingenende gewissermaßen am Anschlagabschnitt gehalten ist.

Die Aufnahme kann sich ausgehend von dem Anschlagabschnitt in Richtung der Verzahnung gesehen erweitern, um einen Freiraum für eine Drehbewegung der Schraubendreherklinge bereitzustellen. Durch die Erweiterung der Aufnahme ist gewährleistet, dass sich ein Klingenende bewegen kann und hierbei einen Zahn der Verzahnung beaufschlagen kann.

Eine spezielle Ausgestaltung der Erfindung sieht vor, dass die Aufnahme eine fächerartige Form aufweist. Das schmale Ende des Fächers bildet hierbei den Anschlagabschnitt, während das breite Ende des Fächers den Freiraum für die Bewegung der Klinge bereitstellt.

Der Freiraum kann ausreichend bemessen sein, um ein Hinwegdrehen einer Standard-Schraubendreher-Klinge über den wenigstens einen in die Aufnahme hineinragenden Zahn zu ermöglichen. Die Klinge kann bei dieser Ausgestaltung mehrere aufeinanderfolgende Zähne der Verzahnung nacheinander beaufschlagen, ohne dass sie hierfür aus der Aufnahme entfernt werden muss. Für den Monteur ist somit auch bei größeren Verstellwegen kein mehrfaches Ansetzen des Schraubendrehers erforderlich, was den Montagevorgang weiter vereinfacht.

Gemäß einer Ausführungsform der Erfindung weist die Verzahnung einen gekrümmten, insbesondere einen konkav gekrümmten Verlauf auf. Der Verlauf kann insbesondere an die gekrümmte Bewegungsbahn angepasst sein, welche der betreffende Abschnitt des Halterungsteils beim Schwenken beschreibt.

Speziell kann der Verlauf der Verzahnung einen Kreisbogen beschreiben, dessen Mittelpunkt auf der ersten Schwenkachse liegt.

Eine weitere Ausführungsform der Erfindung sieht vor, dass die Verzahnung als Innenverzahnung an einem Randabschnitt einer mit der Aufnahme überlappenden Aussparung des ersten oder des zweiten Halterungsteils ausgeführt ist. Die Schraubendreher-Klinge kann bei Bedarf durch die Aussparung hindurch in die Aufnahme eingeführt werden. Eine Innenverzahnung an einer Aussparung ist besonders einfach und kostengünstig herstellbar, insbesondere bei einem plattenartigen Bauteil.

Bevorzugt umfasst die Verzahnung wenigstens zwei Zähne und höchstens fünf Zähne. Diese Ausgestaltung hat sich in der Praxis als besonders günstig erwiesen.

Gemäß einer weiteren Ausführungsform der Erfindung ist das zweite Halterungsteil am ersten Halterungsteil lösbar festlegbar, vorzugsweise mittels einer Schraubverbindung. Das Verdrehen der beiden Halterungsteile gegeneinander kann bei gelöster Festlegung erfolgen. Nach Abschluss des Justiervorgangs können die Halterungsteile aneinander festgelegt werden, indem zum Beispiel eine oder mehrere Schrauben angezogen werden. Die Halterung ist dann gegen ein unbeabsichtigtes Verstellen gesichert.

Eine erfindungsgemäße Halterung kann ein drittes Halterungsteil umfassen, wobei das erste Halterungsteil über das dritte Halterungsteil an der ortsfesten Fixierfläche befestigbar ist, und wobei das erste Halterungsteil relativ zu dem dritten Halterungsteil um eine zweite Schwenkachse drehbar ist, insbesondere wobei die zweite Schwenkachse rechtwinklig zu der ersten Schwenkachse verläuft. Diese Ausgestaltung ermöglicht eine Ausrichtung des zugehörigen Sensors um zwei voneinander unabhängige Schwenkachsen. Eine Neigungsverstellung mit zwei Freiheitsgraden ist insbesondere bei der Montage von Laserscannern wichtig, bei welchen die Scanebene häufig exakt parallel zu einer Bezugsebene wie zum Beispiel dem Boden verlaufen muss.

Eine bevorzugte Ausgestaltung der Erfindung sieht vor, dass an dem dritten Halterungsteil eine weitere Aufnahme für eine Schraubendreherklinge und an dem ersten Halterungsteil eine weitere Verzahnung vorgesehen ist, oder umgekehrt, wobei wenigstens ein Zahn der weiteren Verzahnung derart in die weitere Aufnahme hineinragt, dass er durch ein Klingenende einer in die weitere Aufnahme eingeführten Schraubendreher-Klinge unter Abstützung des anderen Klingenendes an einem Anschlagabschnitt der weiteren Aufnahme beaufschlagbar ist, um das erste Halterungsteil gegenüber dem dritten Halterungsteil um die zweite Schwenkachse zu verdrehen. Somit kann mittels ein und desselben Schraubendrehers eine feinfühlige Neigungsverstellung der Halterung um zwei verschiedene Schwenkachsen erfolgen.

Vorzugsweise ist das dritte Halterungsteil plattenförmig, um eine einfache Herstellung zu gewährleisten. Speziell kann das dritte Halterungsteil als einfache Halteplatte für eine Wand-, Decken- oder Gestellmontage ausgeführt sein. Eine solche Halteplatte kann mit mehreren Ausnehmungen versehen sein, wobei wenigstens eine der Ausnehmungen eine Aufnahme für eine Schraubdreherklinge bildet und wenigstens eine andere Ausnehmung zum Durchführen eines Befestigungsmittels wie einer Schraube vorgesehen ist.

Gemäß einer weiteren Ausführungsform der Erfindung sind das erste Halterungsteil und das zweite Halterungsteil als ineinandergesteckte Bügel mit jeweils zwei zumindest im Wesentlichen parallelen Schenkeln ausgeführt, wobei die Verzahnung an einem Schenkel des ersten Halterungsteils vorgesehen ist und die Aufnahme am benachbarten Schenkel des zweiten Halterungsteils vorgesehen ist, oder umgekehrt. Dies ermöglicht eine besonders einfache und Platz sparende Konstruktion.

An beiden Schenkelpaaren der ineinandergesteckten Bügel können jeweilige Anordnungen aus einer Aufnahme und einer Verzahnung vorgesehen sein. Dies ermöglicht eine Justierung der Halterung wahlweise von einer Seite oder von der entgegengesetzten Seite aus. Dies erleichtert die Montage insofern, als in manchen Anwendungssituationen eine Seite der Halterung schlecht oder überhaupt nicht zugänglich ist.

Weiterbildungen der Erfindung sind auch in den abhängigen Ansprüchen, der Beschreibung sowie der beigefügten Zeichnung angegeben.

Die Erfindung wird nachfolgend beispielhaft unter Bezugnahme auf die Zeichnungen beschrieben.
- Fig. 1: ist eine perspektivische Ansicht eines Laserscanners in einer erfindungsgemäßen Halterung.
- Fig. 2: ist eine Explosionsdarstellung der in Fig. 1 dargestellten Anordnung.
- Fig. 3: ist eine vergrößerte seitliche Teilansicht der in Fig. 1 dargestellten Anordnung.
- Fig. 4: ist eine vergrößerte Teilansicht der in Fig. 1 dargestellten Anordnung von vorn.
- Fig. 5: zeigt eine Aufnahme der in Fig. 1 dargestellten Halterung, in welche eine Schraubendreherklinge in einer ersten Stellung eingeführt ist.
- Fig. 6: zeigt die Anordnung gemäß Fig. 5 mit geringfügig verdrehter Schraubendreherklinge.
- Fig. 7: zeigt die Anordnung gemäß Fig. 5 mit gegenüber Fig. 6 weiter verdrehter Schraubendreherklinge.
- Fig. 8: ist eine Vorderansicht eines Laserscanners, der mittels einer erfindungsgemäßen Halterung an einem Wandabschnitt befestigt ist.
- Fig. 9: ist eine Seitenansicht des in Fig. 8 gezeigten Laserscanners.

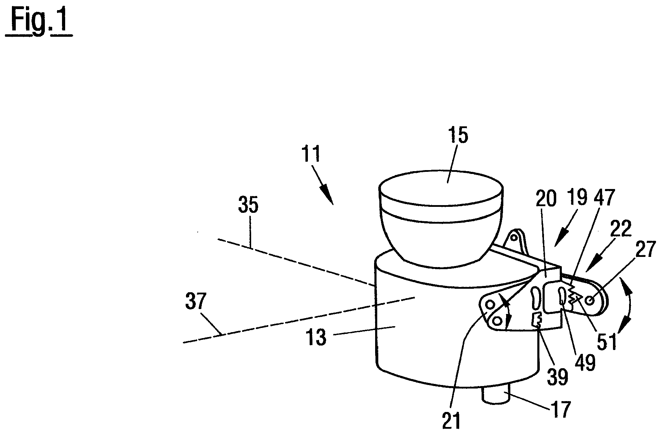

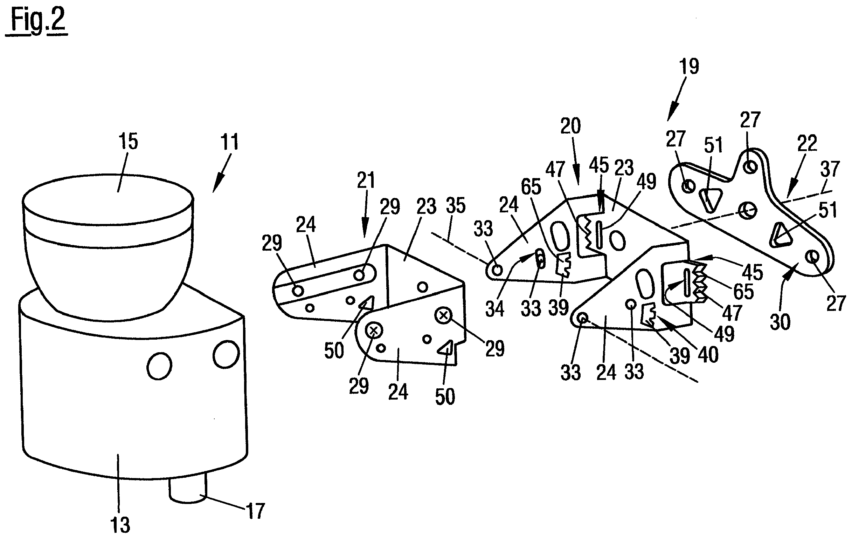

Der in Fig. 1 und 2 dargestellte Laserscanner 11 umfasst ein Sensorgehäuse 13, einen Scankopf 15 sowie einen Versorgungs- und Signalanschluss 17. Der Scankopf 15 ist vorzugsweise dazu ausgebildet, mittels eines bewegten Laserstrahls eine Scanebene aufzuspannen. Eine erfindungsgemäße Halterung 19 dient dazu, den Laserscanner 11 an einer ortsfesten Fixierfläche wie zum Beispiel einer Wand, einer Decke, einem Stützbauteil oder dergleichen zu befestigen. Wie in Fig. 2 erkennbar ist, ist die Halterung 19 dreiteilig ausgeführt, umfasst also ein erstes Halterungsteil 20, ein zweites Halterungsteil 21 sowie ein drittes Halterungsteil 22. Während das in Fig. 2 mittig angeordnete erste Halterungsteil 20 und das in Fig. 2 links angeordnete zweite Halterungsteil 21 jeweils als Bügel mit einem zentralen Steg 23 und zwei zumindest im Wesentlichen parallelen Schenkeln 24 ausgeführt sind, ist das in Fig. 2 rechts angeordnete dritte Halterungsteil 22 als Platte ausgeführt.

Die Befestigung der Halterung 19 an der ortsfesten Fixierfläche erfolgt über das dritte Halterungsteil 22, das dementsprechend mit mehreren Befestigungslöchern 27 zum Durchführen nicht dargestellter Montageschrauben versehen ist. An den Schenkeln 24 des zweiten Halterungsteils 21 befinden sich jeweils zwei Schrauben 29, mittels welchen das zweite Halterungsteil 21 am Sensorgehäuse 13 anschraubbar ist.

Zum Festlegen der einzelnen Halterungsteile 20, 21, 22 zueinander sind unterschiedlich angeordnete Fixierschrauben 33 vorgesehen.

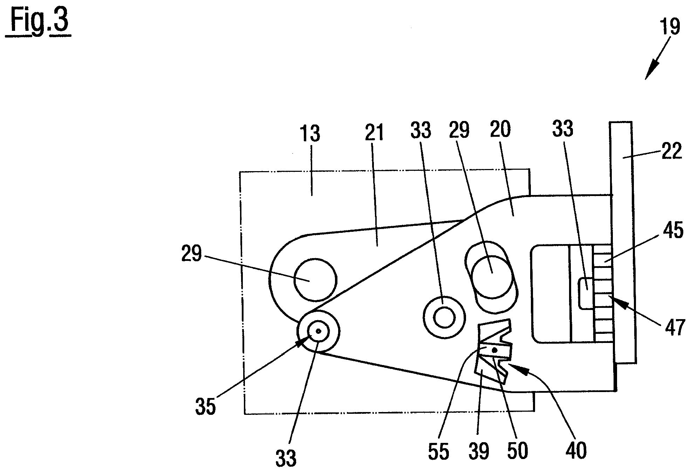

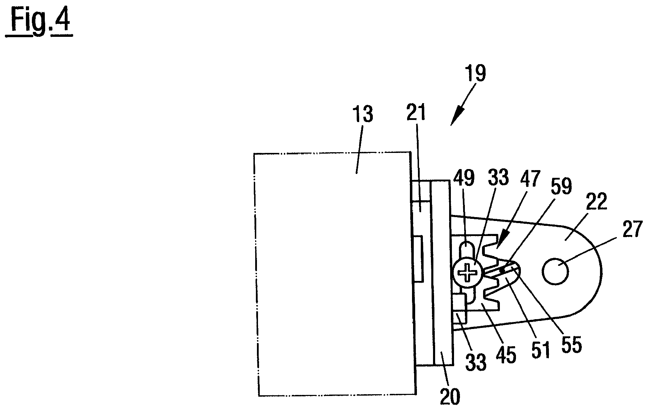

Im zusammengesetzten Zustand der Halterung 19 sind die beiden bügelförmigen Halterungsteile 20, 21 ineinander gesteckt und das erste Halterungsteil 20 liegt an der Vorderseite 30 des dritten Halterungsteils 22 an. Weiterhin ist das erste Halterungsteil 20 mittels Fixierschrauben 33 am zweiten Halterungsteil 21 festlegbar. Ebenso ist das erste Halterungsteil 20 am dritten Halterungsteil 22 festlegbar. Die für den letztgenannten Fixierprozess eingesetzten Fixierschrauben sind in Fig. 2 der Übersichtlichkeit halber weggelassen. Jedoch ist in Fig. 3 und 4 eine solche zum Festlegen des ersten Halterungsteils 20 am dritten Halterungsteil 22 vorgesehene Fixierschraube 33 dargestellt.

Bei gelösten Fixierschrauben 33 können die drei Halterungsteile 20, 21, 22 relativ zueinander bewegt werden. Speziell kann das zweite Halterungsteil 21 relativ zu dem ersten Halterungsteil 20 um eine erste Schwenkachse 35 gedreht werden, und das zweite Halterungsteil 21 kann gegenüber dem dritten Halterungsteil 22 um eine zu der ersten Schwenkachse 35 rechtwinklig verlaufende zweite Schwenkachse 37 gedreht werden. Die Schraubenachsen der beiden vom zentralen Steg 23 des ersten Halterungsteils 20 entfernten Fixierschrauben 33 fallen mit der ersten Schwenkachse 35 zusammen. Die beiden dem zentralen Steg 23 zugewandten Fixierschrauben 33 sitzen in Langlöchern 34, von denen in Fig. 2 wegen des breiten Schraubenkopfs lediglich eines zu erkennen ist. Die Langlöcher 34 ermöglichen ein Schwenken des zweiten Halterungsteils 21 relativ zum ersten Halterungsteil 20.

An den beiden Schenkeln 24 des ersten Halterungsteils 20 sind zwei gegenüberliegende Aussparungen 39 vorgesehen, an welchen jeweils eine Innenverzahnung 40 mit zwei Zähnen 65 ausgebildet ist. Vom zentralen Steg 23 des ersten Halterungsteils 20 aus erstrecken sich außerdem wie gezeigt zwei Vorsprünge 45, an welchen jeweilige Außenverzahnungen 47 mit vier Zähnen 65 ausgebildet sind. Die Vorsprünge 45 sind mit langlochartigen Durchführungen 49 versehen. Durch Hindurchführen jeweiliger Fixierschrauben 33 (Fig. 3 und 4) durch die Durchführungen 49 und Eindrehen der Fixierschrauben 33 in nicht gezeigte Gewindelöcher des dritten Halterungsteils 22 kann ein Festlegen des ersten Halterungsteils 20 am dritten Halterungsteil 22 erfolgen.

An den Schenkeln 24 des zweiten Halterungsteils 21 sind jeweilige fächerförmige Ausnehmungen 50 vorgesehen, welche Aufnahmen für eine Schraubendreher-Klinge 55 bilden. Ebenso sind an dem dritten Halterungsteil 22 zwei fächerförmige Ausnehmungen 51 vorgesehen.

Wie in Fig. 3 erkennbar ist, überlappen im zusammengesetzten Zustand der Halterung 19 die am ersten Halterungsteil 20 vorgesehenen Aussparungen 39 mit den am zweiten Halterungsteil 21 vorgesehenen fächerförmigen Ausnehmungen 50. Ebenso überlappen wie in Fig. 4 erkennbar die am ersten Halterungsteil 20 vorgesehenen Vorsprünge 45 mit den am dritten Halterungsteil 22 vorgesehenen fächerförmigen Ausnehmungen 51. Hierbei ragen jeweils die Zähne 65 der Innenverzahnungen 40 in den breiten Bereich der fächerförmigen Ausnehmungen 50 hinein. Ebenso ragen die Zähne 65 der Außenverzahnungen 47 jeweils in den breiten Bereich der fächerförmigen Ausnehmungen 51 hinein.

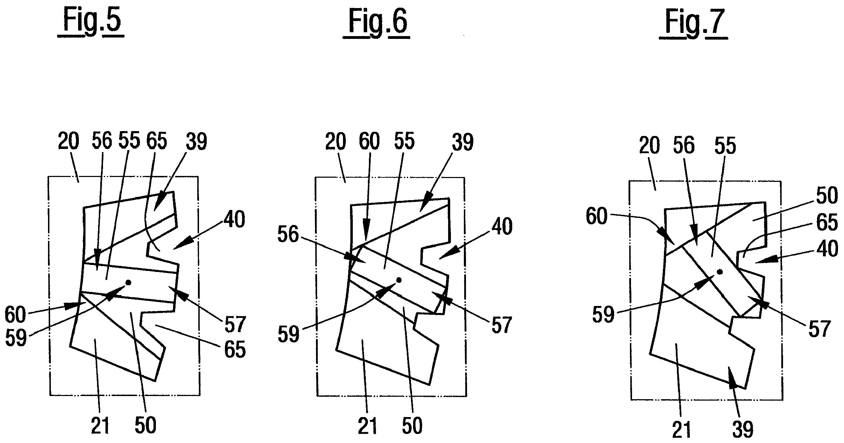

Zum Justieren der Halterung 19 wird die Schraubendreher-Klinge 55 eines handelsüblichen Schlitz-Schraubendrehers in eine der fächerförmigen Ausnehmungen 50, 51 eingeführt, wie in Fig. 5 bis 7 anhand einer am zweiten Halterungsteil 21 vorgesehenen Ausnehmung 50 dargestellt ist. Ein erstes Klingenende 56 der Schraubendreher-Klinge 55 befindet sich dabei am schmalen Ende der fächerförmigen Ausnehmung 50, während das zweite Klingenende 57 zwischen zwei Zähnen 65 der Innenverzahnung 40 angeordnet ist. Bei einem Verdrehen der Schraubendreher-Klinge 55 um die Schraubendreherachse 59 stützt sich das erste Klingenende 56 an einem Anschlagabschnitt 60 der fächerförmigen Ausnehmung 50 ab und das zweite Klingenende 57 beaufschlagt einen Zahn 65 der Innenverzahnung 40. Dadurch wird die Innenverzahnung 40 gegenüber der fächerförmigen Ausnehmung 50 verschoben und das zweite Halterungsteil 21 wird dementsprechend gegenüber dem ersten Halterungsteil 20 um die erste Schwenkachse 35 (Fig. 2) gedreht. Wie aus Fig. 7 hervorgeht, ist der durch den breiten Bereich der fächerförmigen Ausnehmung 50 gebildete Freiraum für die Bewegung der Schraubendreher-Klinge 55 so groß, dass diese sich über den Zahn 65 hinwegdrehen kann, wobei das erste Klingenende 56 aus dem Anschlagabschnitt 60 herausgleitet und nach weiterer Drehung das zweite Klingenende 57 in den Anschlagabschnitt 60 gelangt. Die Schraubendreher-Klinge 55 kann somit bei Bedarf mehrmals um die Schraubendreherachse 59 gedreht werden, ohne dass hierfür der Schraubendreher neu angesetzt werden muss. Durch Drehen des Schraubendrehers ist insgesamt eine Neigungsverstellung des Laserscanners 11 um beispielsweise 10° möglich.

Es versteht sich, dass eine Verdrehung des ersten Halterungsteils 20 gegenüber dem dritten Halterungsteil 22 um die zweite Schwenkachse 37 in analoger Weise durchgeführt werden kann. Der Monteur kann dabei auswählen, welche der beiden fächerförmigen Ausnehmungen 50 des ersten Halterungsteils 20 und welche der beiden fächerförmigen Ausnehmungen 51 des zweiten Halterungsteils 21 er zum Justieren verwendet.

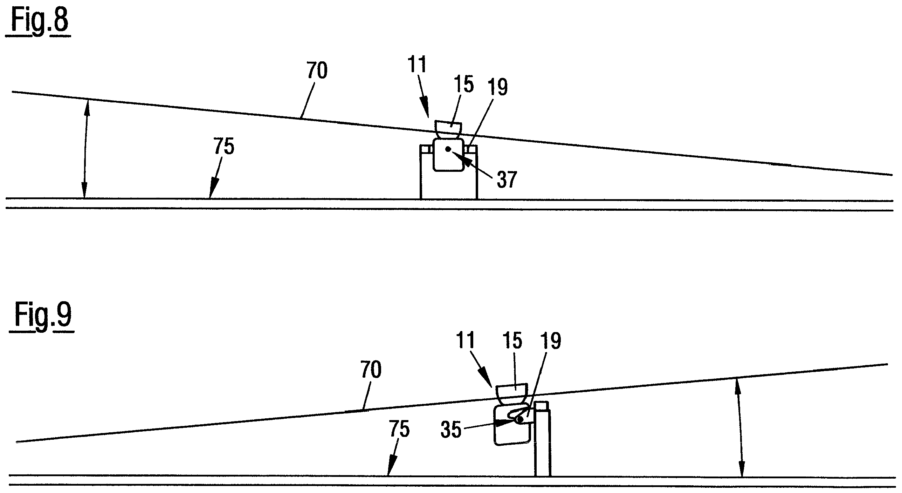

Wie durch die Fig. 8 und 9 verdeutlicht ist, ermöglicht die erfindungsgemäße Halterung 19 das exakte Ausrichten der durch den Scankopf 15 aufgespannten Scanebene 70 parallel zum Boden 75, indem zunächst die Neigung um die erste Schwenkachse 35 und anschließend die Neigung um die zweite Schwenkachse 37 justiert wird. Sobald die gewünschte Ausrichtung der Scanebene 70 erreicht ist, werden die Fixierschrauben 33 festgedreht, so dass die drei Halterungsteile 20, 21, 22 aneinander festgelegt sind und ein unbeabsichtigtes Verstellen der Halterung 19 vermieden wird.

Insgesamt ermöglicht die erfindungsgemäße Halterung 19 ein einfaches und schnelles Feinjustieren der Scanebene 70 des Laserscanners 11.

### Bezugszeichenliste

- 11: Laserscanner
- 13: Sensorgehäuse
- 15: Scankopf
- 17: Versorgungs- und Signalanschluss
- 19: Halterung
- 20: erstes Halterungsteil
- 21: zweites Halterungsteil
- 22: drittes Halterungsteil
- 23: zentraler Steg
- 24: Schenkel
- 27: Befestigungsloch
- 29: Schraube
- 30: Vorderseite
- 33: Fixierschraube
- 34: Langloch
- 35: erste Schwenkachse
- 37: zweite Schwenkachse
- 39: Aussparung
- 40: Innenverzahnung
- 45: Vorsprung
- 47: Außenverzahnung
- 49: Durchführung
- 50: fächerförmige Ausnehmung
- 51: fächerförmige Ausnehmung
- 55: Schraubendreher-Klinge
- 56: erstes Klingenende
- 57: zweites Klingenende
- 59: Schraubendreherachse
- 60: Anschlagabschnitt
- 65: Zahn
- 70: Scanebene
- 75: Boden

## Patentansprüche

1. Halterung (19) für einen optoelektronischen Sensor (11), insbesondere einen Laserscanner, mit einem ersten Halterungsteil (20), das für eine direkte oder indirekte Befestigung an einer ortsfesten Fixierfläche wie z. B. einer Wand ausgebildet ist, und einem zweiten Halterungsteil (21), das mit einem Gehäuse (13) des optoelektronischen Sensors (11) koppelbar ist, wobei das zweite Halterungsteil (21) relativ zu dem ersten Halterungsteil (20) um eine erste Schwenkachse (35) drehbar ist,
**dadurch gekennzeichnet, dass**
an dem zweiten Halterungsteil (21) eine Aufnahme (50) für eine Schraubendreher-Klinge (55) und an dem ersten Halterungsteil (20) eine Verzahnung (40) vorgesehen ist, oder umgekehrt, wobei wenigstens ein Zahn (65) der Verzahnung (40) derart in die Aufnahme (50) hineinragt, dass er durch ein Klingenende (57) einer in die Aufnahme (50) eingeführten Schraubendreher-Klinge (55) unter Abstützung des anderen Klingenendes (56) an einem Anschlagabschnitt (60) der Aufnahme (50) beaufschlagbar ist, um das zweite Halterungsteil (21) gegenüber dem ersten Halterungsteil (20) um die erste Schwenkachse (35) zu verdrehen.

2. Halterung nach Anspruch 1,
**dadurch gekennzeichnet, dass**
der Anschlagabschnitt (60) zwei gegenüberliegende Anschlagflächen umfasst, die durch jeweilige Innenwandbereiche der Aufnahme (50) gebildet sind.

3. Halterung nach Anspruch 2,
**dadurch gekennzeichnet, dass**
sich die Aufnahme (50) ausgehend von dem Anschlagabschnitt (60) in Richtung der Verzahnung (40) gesehen erweitert, um einen Freiraum für eine Drehbewegung der Schraubendreher-Klinge (55) bereitzustellen.

4. Halterung nach Anspruch 3,
**dadurch gekennzeichnet, dass**
die Aufnahme (50) eine fächerartige Form aufweist.

5. Halterung nach Anspruch 3 oder 4,
**dadurch gekennzeichnet, dass**
der Freiraum ausreichend bemessen ist, um ein Hinwegdrehen einer Standard-Schraubendreher-Klinge (55) über den wenigstens einen in die Aufnahme (50) hineinragenden Zahn (65) zu ermöglichen.

6. Halterung nach einem der vorstehenden Ansprüche,
**dadurch gekennzeichnet, dass**
die Verzahnung (40) einen gekrümmten, insbesondere einen konkav gekrümmten, Verlauf aufweist.

7. Halterung nach Anspruch 6,
**dadurch gekennzeichnet, dass**
der Verlauf der Verzahnung (40) einen Kreisbogen beschreibt, dessen Mittelpunkt auf der ersten Schwenkachse (35) liegt.

8. Halterung nach einem der vorstehenden Ansprüche,
**dadurch gekennzeichnet, dass** die Verzahnung (40) als Innenverzahnung an einem Randabschnitt einer mit der Aufnahme (50) überlappenden Aussparung (39) des ersten oder des zweiten Halterungsteils (20, 21) ausgeführt ist.

9. Halterung nach einem der vorstehenden Ansprüche,
**dadurch gekennzeichnet, dass**
die Verzahnung (40) wenigstens zwei Zähne und höchstens fünf Zähne umfasst.

10. Halterung nach einem der vorstehenden Ansprüche,
**dadurch gekennzeichnet, dass**
das zweite Halterungsteil (21) am ersten Halterungsteil (20) lösbar festlegbar ist, vorzugsweise mittels einer Schraubverbindung.

11. Halterung nach einem der vorstehenden Ansprüche,
**gekennzeichnet durch**
ein drittes Halterungsteil (22), wobei das erste Halterungsteil (20) über das dritte Halterungsteil (22) an der ortsfesten Fixierfläche befestigbar ist, und wobei das erste Halterungsteil (20) relativ zu dem dritten Halterungsteil (22) um eine zweite Schwenkachse (37) drehbar ist, insbesondere wobei die zweite Schwenkachse (37) rechtwinklig zu der ersten Schwenkachse (35) verläuft.

12. Halterung nach Anspruch 11,
**dadurch gekennzeichnet, dass**
an dem dritten Halterungsteil (22) eine weitere Aufnahme (51) für eine Schraubendreher-Klinge (55) und an dem ersten Halterungsteil (20) eine weitere Verzahnung (47) vorgesehen ist, oder umgekehrt, wobei wenigstens ein Zahn (65) der weiteren Verzahnung (47) derart in die weitere Aufnahme (51) hineinragt, dass er durch ein Klingenende (57) einer in die weitere Aufnahme (51) eingeführten Schraubendreher-Klinge (55) unter Abstützung des anderen Klingenendes (56) an einem Anschlagabschnitt (60) der weiteren Aufnahme (51) beaufschlagbar ist, um das erste Halterungsteil (20) gegenüber dem dritten Halterungsteil (22) um die zweite Schwenkachse (37) zu verdrehen.

13. Halterung nach Anspruch 11 oder 12,
**dadurch gekennzeichnet, dass**
das dritte Halterungsteil (22) plattenförmig ist.

14. Halterung nach einem der vorstehenden Ansprüche,
**dadurch gekennzeichnet, dass**
das erste Halterungsteil (20) und das zweite Halterungsteil (21) als ineinandergesteckte Bügel mit jeweils zwei zumindest im Wesentlichen parallelen Schenkeln (24) ausgeführt sind, wobei die Verzahnung (40) an einem Schenkel (24) des ersten Halterungsteils (20) vorgesehen ist und die Aufnahme (50) am benachbarten Schenkel (24) des zweiten Halterungsteils (21) vorgesehen ist, oder umgekehrt.

15. Halterung nach Anspruch 14,
**dadurch gekennzeichnet, dass**
an beiden Schenkelpaaren der ineinandergesteckten Bügel jeweilige Anordnungen aus einer Aufnahme (50) und einer Verzahnung (40) vorgesehen sind.
